# EUROPEAN PATENT SPECIFICATION

(11) **EP 0 324 243 B1**
(45) Date of publication and mention of the grant of the patent: **14.04.1993**
(21) Application number: 88311740.0
(22) Date of filing: 12.12.1988
(51) Int. Cl.: B01J 13/02, C03C 17/23, C09J 7/02

(54) **Glass microbubbles to which are adhered dyed silica**
Von gefärbten Kieselsäuren beschichtete Glasmikrokügelchen
Microbilles de verre revêtues de silices colorées

(30) Priority: 13.01.1988 US 143460
(43) Date of publication of application: 19.07.1989
(73) Proprietor: MINNESOTA MINING AND MANUFACTURING COMPANY, St. Paul, Minnesota 55133-3427 (US)
(72) Inventor: Feichtmeier,Hans Georg c/o Minnesota Mining and, P.O. Box 33427 St. Paul Minnesota 55133 (US)
(74) Representative: Baillie, Iain Cameron

(56) References cited:
- EP-A- 0 202 938
- PATENT ABSTRACTS OF JAPAN vol. 7, no. 122 (C-168)(1267) 26 May 1983.

## Description

### Background of the Invention

### Field of the Invention

The invention primarily concerns pressure-sensitive adhesive tape which, like that of U.S. Patent No. 4,223,067 (Levens), is foamlike by virtue of glass microbubbles in its pressure-sensitive adhesive layer. More broadly, the invention concerns any normally transparent article filled with glass microbubbles. The invention also concerns glass microbubbles having a coating whereby the coated glass microbubbles impart coloring and/or opacity to a normally transparent article in which the coated glass microbubbles are dispersed.

### Description of the Related Art

Foam-backed pressure-sensitive adhesive tape is commonly used to adhere an article to a substrate. The foam backings of such tapes often are pigmented with carbon black to afford a dark appearance that camouflages their presence.

The pressure-sensitive adhesive tape of the above-cited Levens patent has a foamlike appearance and character, even though it is not a foam, and is useful for purposes previously requiring a foam-backed pressure-sensitive adhesive tape. A foamlike tape of the Levens patent now on the market is made by ultraviolet polymerization of a layer of an adhesive-forming mixture containing colorless glass microbubbles which, due to the multiple reflections of light at the surfaces of the microbubbles, act as a white pigment, thus making the tape undesirably visible in uses such as sealing a skylight or attaching body-side moldings to automotive vehicles or simulated mullion bars to glass windows.

Because of its superior performance characteristics, the foamlike tape of the Levens patent is often preferred to foam-backed tapes for such purposes and would be more acceptable if its adhesive layer were colored to blend with the color of objects to which it will be adhered. If carbon black or other pigment were added to the photopolymerizable adhesive forming mixture in amounts producing sufficient blackness to blend with dark objects, this would block the ultraviolet radiation from polymerizing the mixture to a pressure-sensitive state. Up to about 0.1 or 0.15 percent by weight of carbon black can be employed without undue interference with the polymerization of a 50-micrometer layer, but such small amounts produce only a light grey color.

U.S. Patents No. 4,612,242 (Vesley et al.) and No. 4,618,525 (Chamberlain et al.) teach that by applying an inorganic, thin-film coating to the glass microbubbles, the tape of the aforementioned Levens patent can have a sufficiently dark appearance to be camouflaged. The Chamberlain patent also teaches that glass microbubbles having thin-film coatings can be used as fillers in other matrices to provide coherent articles other than tapes, thus affording good hiding power while also imparting esthetically pleasing colors to normally transparent articles.

U.S. Patent No. 4,666,771 (Vesley et al.) teaches that by forming glass microbubbles of stained glass, the tape of the Levens patent can be colored and, when a pigment or dye is dispersed throughout the adhesive layer, the tape can be darkened in appearance to be camouflaged.

### Disclosure of Invention

### Brief Summary of the Invention

The invention concerns a foamlike pressure-sensitive adhesive tape which is equivalent in performance to the tape of the above-cited Levens patent, can present a sufficiently dark or colored appearance to meet the needs mentioned above, and yet can be produced by photopolymerization. Like the tape of the Levens patent, the foamlike appearance and character of the novel tape results from having dispersed throughout its pressure-sensitive adhesive layer glass microbubbles having an average diameter or less than 200 micrometers. As compared to the foamlike pressure-sensitive adhesive tapes of the above-cited Vesley and Chamberlain patents, those of the invention can have more intense color, e.g., more intense blackness. Also, tapes of the invention can have any desired color as opposed to the Vesley and Chamberlain patents being limited to such colours as can be provided by available thin-film coatings and by stained glasses that can be formed into microbubbles.

This important technical advance is achieved by glass microbubbles, to each of which are adhered dyed, finely divided silica particles. By "finely divided" is meant to a surface area of at least 50 m²/g.

In addition to the aforementioned technical advance, glass microbubbles to which the dyed silica particles are adhered are useful as fillers in other matrices to provide coherent articles other than tapes. In such uses, the microbubbles afford surprisingly good hiding power while also imparting esthetically pleasing colors to normally transparent articles. The good hiding power is in part due to the easy dispersibility of the novel coated microbubbles.

Glass microbubbles to which are adhered dyed silica particles (here sometimes called "dyed glass microbubbles") afford far more intense coloring to any normally transparent article than does a mixture of dyed silica particles and uncoated glass microbubbles.

Two procedures have been developed for adhering dyed silica to the glass microbubbles. One procedure involves the steps of
1) dissolving an ionic dye in volatile solvent,
2) dispersing into the solution finely divided silica, having a surface area of from 50 m²/g to 400 m²/g,
3) adding to the dispersion glass microbubbles having an average diameter of less than 200 micrometers,
4) evaporating the solvent to provide dyed glass microbubbles of the invention.

The other procedure involves the first two steps and then, while suspending the glass microbubbles in a fluidized bed, spraying the dispersion into the fluidized bed to provide dyed glass microbubbles of the invention.

The glass microbubbles can be used to make a foamlike pressure-sensitive adhesive tape of the invention by the steps of
1) dispersing the dyed microbubbles into a syrup which is photopolymerizable to a pressure-sensitive adhesive state and in which said ionic dye is insoluble,
2) coating the microbubble-containing syrup onto a carrier, and
3) photopolymerizing the coated syrup to a pressure-sensitive adhesive state.

The intensity of color afforded by the novel dyed glass microbubbles can be increased either by increasing the ratio of dye to silica or, without changing that ratio, by increasing the ratio of dyed silica to glass microbubbles. Care should be taken in selecting each of those ratios when the novel dyed glass microbubbles are to be used in a photopolymerizable matrix, lest the dyed microbubbles unduly inhibit the photopolymerizing radiation. Best results have been achieved when the ratio of dye to silica exceeds 1:20 by weight and when the ratio of dyed silica to undyed glass microbubbles exceeds 1:10 by weight. In order to avoid undue inhibition of photopolymerizing radiation, those two ratios preferably do not exceed 1:1 and 3:1, respectively.

When the ionic dye is black, foamlike tapes of the invention can be almost unnoticable when applied to dark objects, e.g., when used to adhere dark-colored body side molding to dark-colored automotive vehicles. When the color of the ionic dye is other than black, the color of the foamlike pressure-sensitive adhesive tape can be more intense and vivid than has been possible in photopolymerized pressure-sensitive adhesive tapes of the prior art. The finely divided silica preferable is hydrophilic, and its surface area should be from 50 to 400 m²/g (B.E.T. surface area). When hydrophobic silica has been substituted for hydrophilic silica, foamlike pressure-sensitive adhesive tapes made from the dyed glass microbubbles appear to have slightly less intense coloring.

Before being dyed, the average diameter of the glass microbubbles should be from 5 to 200 micrometers. An average diameter below 5 micrometers would tend to make the microbubbles unduly expensive, and it would be difficult to coat out a photopolymerizable mixture containing dyed glass microbubbles having an average diameter above 200 micrometers. The microbubbles are most economical to manufacture when their average diameter is within the range of 20 to 80 micrometers. Their average density (ASTM D-2840-69) should be less than 1.0 g/cm³, preferably less than 0.4 g/cm³, and desirably less than 0.3 g/cm³, both for economy and for ease of dispersing them into adhesive-producing monomers.

After being dyed, the glass microbubbles have slightly larger average diameter as indicated by sieve distribution analysis. The density of the dyed glass microbubbles may be somewhat greater than it was before the dying, possibly due to weight of the adhered dyed silica and/or breakage of glass microbubbles in the dying process.

The dyed glass microbubbles may comprise from 5 to 65 volume percent of the pressure-sensitive adhesive layer of the novel foamlike tape. It would be unduly difficult to try to make a coherent and uniform pressure-sensitive adhesive layer at more than 65 volume percent, whereas the advantages from using microbubbles may not be significantly realized at less than 5 volume percent. Preferably from 10 to 55 volume percent of the pressure-sensitive adhesive layer comprises dyed glass microbubbles.

The thickness of the pressure-sensitive adhesive layer should exceed three times the average diameter of the dyed glass microbubbles and twice the diameter of substantially every microbubble. This enhances migration of the microbubbles within the matrix under applied pressure instead of breaking. It also enables the adhesive to flow into intimate contact with rough or uneven surfaces, while retaining its foam-like character. Optimum performance in this respect is attained if the thickness of the pressure-sensitive adhesive layer exceeds seven times the average diameter of the dyed glass microbubbles.

The pressure-sensitive adhesive matrix of the tape of the invention preferably is an "acrylic pressure-sensitive adhesive" comprising at least one copolymer of monomers comprising (a) a major proportion of acrylic acid ester of nontertiary alkyl alcohol, the molecules of which have from 1 to 14 carbon atoms, and (b) a minor proportion of at least one copolymerizable monomer having a polar group. When at least a major proportion of said molecules have a carbon-to-carbon chain of 4-12 carbon atoms terminating at the hydroxyl oxygen atom and said chain contains at least about one-half the total number of carbon atoms in the molecule, the copolymer is tacky at ordinary room temperature, as disclosed in U.S. Patent Re. 24,906 (Ulrich). However, the term "acrylic pressure-sensitive adhesive" also encompasses adhesives which are not tacky at room temperatures but become tacky only at elevated temperatures, e.g., acrylic copolymers as described above except that a major proportion of the molecules of monomer (a) have a carbon-to-carbon chain substantially shorter than 4 carbon atoms. The substitution of a methacrylic acid ester for a significant portion monomer (a) can produce the same result.

Suitable copolymerizable monomers having a polar group include acrylic acid, methacrylic acid, itaconic acid, maleic anhydride, acrylamide, and N-vinyl-2-pyrrolidone. Of these copolymerizable monomers, those having carboxyl groups provide superior cohesive strength and also excellent adhesion to metallic surfaces, but not nearly as good adhesion to low-energy surfaces as does N-vinyl-2-pyrrolidone, as is taught in U.S. Patent No. 4,364,972 (Moon).

By sequentially coating two different monomer mixtures, each containing dyed glass microbubbles, one employing a carboxyl-containing monomer (b) and the other N-vinyl-2-pyrrolidone as the monomer (b), and then simultaneously photopolymerizing both coatings, one surface of the resulting pressure-sensitive adhesive composite forms strong bonds to low-energy surfaces and the other forms strong bonds to high-energy surfaces.

As taught in the above-cited Levens patent, where it is desired to adhere the microbubble-filled tape to a surface to which its pressure-sensitive adhesive layer would not form a strong bond, it may be desirable to apply to one or both of its faces a layer of unfilled pressure-sensitive adhesive which is especially selected for its adhesion to that surface. Preferably the microbubble-filled layer comprises at least 90% of the thickness of the resulting pressure-sensitive adhesive composite. Whether or not laminated to an unfilled pressure-sensitive adhesive layer, the thickness of the microbubble-filled layer should be at least 0.25 mm. When forming a foamlike pressure-sensitive adhesive layer greater than 1.0 mm using photopolymerization, it may be desirable to coat the microbubble-filled, photopolymerizable monomers onto a carrier that transmits ultraviolet radiation so that the coating can be irradiated from both sides.

The following tests may be used to evaluate tapes of the invention.

### Shear Value

A piece of tape 1.27 cm in width and 1.27 cm in length is adhered by one face of its adhesive to a flat, rigid, polished stainless steel strip and by its other face to a polished stainless steel panel. Before testing, a 1000-g weight rests over the bonded area for 15 minutes. Then the assembly is placed in an air-circulating oven which has been preheated to 70°C, and after 15 minutes, a 250-g weight is hung from the stainless steel strip, with the panel tilted 2° from the vertical to insure against any peel forces. The time at which the weight falls is the "Static Shear Value at 70°C". If no failure, the test is discontinued at 10,000 minutes. Only cohesive failures are reported.

### T-Peel

T-peel is measured as in ASTM D-1876-72 except that the test tapes were 0.5 inch (1.27 cm) in width and were tested only two hours after being adhered to aluminum foil backings. Results are reported in Newtons per decimeter (N/dm). Only cohesive failures are reported.

### 90° Peel

The adhesive layer to be tested is formed on or transferred to 0.15 mm thick aluminum foil which then is slit to a width of 1/2 inch (1.27 cm). The resulting tape is self-adhered to a smooth stainless steel plate under the weight of a 2.04 kg hard-rubber-covered steel roller, 2 passes in each direction. After dwelling at 23°C for 20 minutes, "90° Peel" is measured by moving the free end of the tape away from the steel plate at a rate of about 0.5 cm per second (using a tensile tester).

### Darkness

The darkness of a pressure-sensitive adhesive layer is determined on a Hunter Lab Scan Spectrocolorimeter using a 10-degree reflectance and Illum = D. Used for the evaluation is the Hunter scale (color L a b) where L = 0 is black and L = 100 is white. Since each of a and b for black samples is usually between -5 and +5, they are not reported unless one of them is outside of that range.

### Dyes

Used in the examples were:
A: "Diazol" Schwarz RN 25
B: "Diazol" E Schwarz JRA Quad
C: "Diazol" Bleu Lumiere RI 2417
D: Rouge "Diazol" Lumiere I 2347
E: "Diazol" Light Yellow RL
In the following examples, parts are given by weight. Before being dyed, the glass microbubbles used in the examples had an average density of 0.15 g/cm³ (bulk density of about 0.08 g/cm³) and an average diameter of 40-60 micrometers. After being coated with dyed silica, their bulk density was about 0.15 g/cm³. Bulk density was measured in a cylinder after shaking by hand for about 15 minutes. Examples 1-9 illustrate dyed glass microbubbles of the invention, and Examples 10-15 illustrate foamlike pressure-sensitive adhesive tapes of the invention.

### Example 1

Into an agitator vessel filled with 21.76 parts of methanol, 0.22 part of Dye A was dissolved with stirring at room temperature. While continuing the stirring, 2 parts of hydrophilic fumed silica ("Aerosil" 200, deGussa) was slowly added to provide a homogeneous slurry followed by slowly adding 8 parts of glass microbubbles to a wet powder mass and pulling a 150-mm vacuum while increasing the temperature to 40°C, the methanol being recovered by top distillation. The resulting dark grey powder (i.e., glass microbubbles to which are adhered dyed silica) was used to make the pressure-sensitive adhesive tape of Example 10.

### Examples 2-5

Dyed glass microbubbles were prepared as in Example 1 except replacing dye A with the other dyes as follows:

| Example | Dye | Color of dyed microbubbles |
|---|---|---|
| 2 | B | dark grey |
| 3 | C | light blue |
| 4 | D | light red |
| 5 | E | light yellow |

### Example 6

A homogeneous slurry was prepared from 21.76 parts of methanol, 0.22 part of Dye B and 2.0 parts of the silica of Example 1. Then using a paint sprayer type nozzle, this slurry was sprayed into a fluidized bed of 60 cm by 20 cm in which 8 parts (200 grams) of glass microbubbles were suspended to a depth of 60 cm. When the methanol had evaporated, the dyed silica had become adhered to the glass microbubbles. The resulting dark grey powder was used to make the pressure-sensitive adhesive tape of Example 11.

### Examples 7-8

Dyed microbubbles were prepared as in Example 6 except that in Example 7 the amounts of Dye B and silica were doubled, and in Example 8 their amounts were quadrupled.

A sieve distribution analysis of the dyed microbubbles of each of Examples 6, 7 and 8 was made as reported in Table I together with an analysis of undyed glass microbubbles as a Control.

**Table I**

| Size of Sieve Openings (micrometers) | | | | | | | |
|---|---|---|---|---|---|---|---|
| Example | 500 | 250 | 125 | 63 | 40 | 20 | <20 |
| 6 | 1% | 0% | 10% | 50% | 36% | 3% | 0% |
| 7 | 1 | 1 | 8 | 34 | 43 | 13 | 0 |
| 8 | 7 | 13 | 19 | 27 | 30 | 4 | 0 |
| Control | 0 | 1 | 13 | 41 | 22 | 19 | 4 |

These sieve analyses indicate that the dyed silica is adhered to the glass microbubbles.

### Example 9

Dyed glass microbubbles were prepared as in Example 6 except that the hydrophilic silica was replaced by 2 parts of hydrophobic silica ("Aerosil" 972, surface area 200 m²/g).

### Example 10

Used to make a foamlike pressure-sensitive adhesive tape were:

| | Parts by weight |
|---|---|
| Syrup of 87.5 parts of isooctyl acrylate and 12.5 parts of acrylic acid which had been partially polymerized to about 10% conversion | 100.0 |
| Dyed glass microbubbles of Example 1 | 10.22 |
| Photoinitiator: 2,2-dimethoxy-2-phenyl acetophenone ("Irgacure" 651) | 0.30 |
| Crosslinking agent: hexanedioldiacrylate | 0.055 |

The dyed microbubbles were added to a vessel containing the syrup at room temperature while mixing with a propeller mixer at 500 rpm and them adding the photoinitiator and crosslinking agent. This was carefully degassed in a desiccator using a vacuum pump and immediately fed to the nip of a knife coater between a pair of transparent, biaxially-oriented poly(ethylene terephthalate) film, the facing surfaces of which had low-adhesion coatings. The knife coater was adjusted to provide a coating thickness of approximately 1.0 mm. The composite emerging from the roll coater was irradiated between two banks of lamps, 90% of the emissions of which were between 300 and 400 nm with a maximum of 351 nm. The top exposure was 335 mJ/cm² and the bottom exposure was 283 mJ/cm² as measured by a Dynachem Radiometer which is spectrally responsive between 300 and 400 nm, maximum 350 nm. The composite was cooled by blowing air against both films during the irradiation to keep the temperature of the film below 85°C to avoid wrinkling of the films.

### Examples 11-13

Tapes of Examples 11-13 were made as in Example 10 except using dyed glass microbubbles as follows:

| Tape of Example | Dyed Glass Microbubbles of Example |
|---|---|
| 11 | 6 |
| 12 | 8 |
| 13 | 9 |

### Control Tapes

Control Tape 1-C was made as in Example 10 except that the Dyed Glass Microbubbles of Example 1 were replaced by 8 parts of the undyed "Control" glass microbubbles plus 2 parts of hydrophilic silica particles ("Aerosil" 200).

Control Tape 2-C was made in the same way as Control Tape 1-C except that 0.22 part of Dye B was added directly to the syrup along with the undyed glass microbubbles and silica particles.

Control Tape 3-C was made in the same way as Control Tape 2-C except that the silica particles had been dyed with the Dye B and 2.22 parts of dyed silica were added directly to the syrup.

**Table II**

| Example | Color | L | T-Peel (N/dm) | 90° Peel (N/dm) | Shear Value (min.) |
|---|---|---|---|---|---|
| 10 | Grey | 27 | NT | NT | NT |
| 11 | Black | 22 | 390 | 230 | 10,000+ |
| 12 | Black | 18 | NT | NT | NT |
| 13 | Black | 23 | NT | NT | NT |
| 1-C | White | 92 | 370 | 160 | 10,000+ |
| 2-C | White | 78 | NT | NT | NT |
| 3-C | Grey | 35 | 400 | 150 | 10,000+ |
| NT = not tested | | | | | |

### Example 14

Upon removing the poly(ethylene terephthalate) films from a length of the tape of Example 11, an unfilled pressure-sensitive adhesive transfer tape was laminated to each face. The adhesive layer of the transfer tape had a thickness of 0.05 mm and was a polymer of 90 parts of isooctyl acrylate and 10 parts of acrylic acid which had been solution polymerized. Covering one of the faces of the resulting composite tape product was a polyethylene carrier. This composite is here called "Tape of Example 14".

### Example 15

A composite was made as in Example 14 except using a length of tape similar to that of Example 10. However, that length of tape employed the dyed glass microbubbles of Example 3 instead of Example 1.

### Control Tape 4-C

A tape was made as in Example 14 except using a length of Control Tape 1-C instead of the tape of Example 11.

**Table III**

| Example | Color | L | T-Peel (N/dm) | 90° Peel (N/dm) | Shear Value (min.) |
|---|---|---|---|---|---|
| 14 | Black | 22 | 420 | 360 | 10,000+ |
| 15 | Blue | 29* | 380 | 390 | 10,000+ |
| 4-C | White | 92 | 420 | 390 | 10,000+ |

| | | | | | |
|---|---|---|---|---|---|
| *a = 4; b = -7 | | | | | |

## Claims

1. Glass microbubbles having an average diameter of less than 200 micrometers to each of which are adhered finely divided dyed silica particles, wherein the surface area of the silica is from 50 to 400 m²/g.

2. Coated glass microbubbles as defined in claim 1 wherein the ratio of dye to silica is from 1:20 to 1:1 by weight.

3. Coated glass microbubbles as defined in claim 2, wherein the ratio of dyed silica to the glass of the microbubbles is from 1:10 to 3:1 by weight.

4. An article as defined in claim 1 wherein the ratio of the dye to silica is from 1:20 to 1:1 by weight and the ratio of dyed silica to the glass of the microbubbles is from 1:10 to 3:1 by weight, and the microbubbles comprise at least 5 volume percent of the article.

5. Pressure-sensitive adhesive tape comprising a flexible carrier supporting a pressure-sensitive adhesive layer in which are dispersed coated glass microbubbles as defined in claim 1, 2, or 3, the coated microbubbles comprising at least 5 volume percent of the adhesive layer.

6. Pressure-sensitive adhesive tape as defined in claim 5 wherein the pressure-sensitive adhesive comprises at least one copolymer of monomers comprising
(a) acrylic acid ester of nontertiary alcohol, and (b) a polar copolymerizable monomer.

7. Pressure-sensitive adhesive tape as defined in claim 6 wherein the monomers (a) comprise a major proportion of acrylic acid ester of nontertiary alkyl alcohol, the molecules of which have from 1 to 14 carbon atoms, and the monomer (b) is predominantly acrylic acid.

8. Pressure-sensitive adhesive tape as defined in claim 6 wherein the copolymerizable monomer (b) at one surface of the pressure-sensitive adhesive layer is predominately acrylic acid and at the other surface is predominately N-vinyl-2-pyrrolidone.

9. Method of making the dyed glass microbubbles of claim 1 comprising the steps of:
1) dissolving an ionic dye into volatile solvent,
2) dispersing into the solution finely divided silica,
3) contacting the dispersion and glass microbubbles having an average diameter of less than 200 micrometers, and
4) evaporating the solvent to provide glass microbubbles to which are adhered dyed silica particles wherein the surface area of the silica is from 50 to 400 m²/g.

10. Method of making a foamlike pressure-sensitive adhesive tape comprising the steps of:
1) dispersing dyed glass microbubbles as defined in claim 9 into a syrup which is photopolymerizable to a pressure-sensitive adhesive state and in which said ionic dye is insoluble,
2) coating the microbubble-containing syrup onto a carrier, and
3) photopolymerizing the coated syrup to a pressure-sensitive adhesive state.

## Patentansprüche

1. Glasmikrokügelchen mit einem mittleren Durchmesser von weniger als 200 Mikrometer, von denen jede mit feinverteilten, gefärbten Silicateilchen klebend beschichtet ist, bei denen die Oberfläche des Silicas 50 bis 400 m²/g beträgt.

2. Beschichtete Glasmikrokügelchen nach Anspruch 1, bei denen das Gewichtsverhältnis von Farbstoff zu Silica von 1:20 bis 1:1 beträgt.

3. Beschichtete Glasmikrokügelchen nach Anspruch 2, bei denen das Gewichtsverhältnis von gefärbtem Silica zu dem Glas der Mikrokügelchen von 1:10 bis 3:1 beträgt.

4. Gegenstand nach Anspruch 1, bei welchem das Gewichtsverhältnis von Farbstoff zu Silica von 1:20 bis 1:1 beträgt und das Verhältnis von gefärbtem Silica zu dem Glas der Mikrokügelchen von 1:10 bis 3:1 beträgt und die Mikrokügelchen mindestens 5 Vol.-% des Gegenstands ausmachen.

5. Haftklebeband, umfassend einen flexiblen Träger, der eine Haftkleberschicht aufnimmt, in welcher beschichtete Glasmikrokügelchen nach Anspruch 1, 2 oder 3 dispergiert sind und die beschichteten Mikrokügelchen mindestens 5 Vol.-% der Kleberschicht ausmachen.

6. Haftklebeband nach Anspruch 5, bei welchem der Haftkleber mindestens ein Copolymer von Monomeren aufweist, die umfassen: (a) Acrylsäureester von nichttertiärem Alkohol und (b) ein polares copolymerisierbares Monomer.

7. Haftklebeband nach Anspruch 6, bei welchem die Monomere (a) einen größeren Anteil von Acrylsäureester eines nichttertiären Alkylalkohols umfassen, dessen Moleküle 1 bis 14 Kohlenstoffatome aufweisen, und das Monomer (b) überwiegend Acrylsäure ist.

8. Haftklebeband nach Anspruch 6, bei welchem das copolymerisierbare Monomer (b) auf einer Seite des Haftklebebands überwiegend Acrylsäureester und auf der anderen Seite überwiegend N-Vinyl-2-pyrrolidon ist.

9. Verfahren zur Herstellung der gefärbten Glasmikrokügelchen nach Anspruch 1, umfassend die Schritte:
1) Auflösen eines ionischen Farbstoffs in einem flüchtigen Lösungsmittel,
2) Dispergieren in einer Lösung von feinverteiltem Silica,
3) Inkontaktbringen der Dispersion und der Glasmikrokügelchen mit einem mittleren Durchmessern von weniger als 200 Mikrometern und
4) Verdampfen des Lösungsmittels, um Glasmikrokügelchen zu schaffen, die mit gefärbtem Silicateilchen klebend beschichtet sind, wobei die Oberfläche des Silicas von 50 bis 400 m²/g beträgt.

10. Verfahren zur Herstellung eines schaumstoffartigen Haftklebebands, umfassend die Schritte:
1) Dispergieren von gefärbten Glasmikrokügelchen nach Anspruch 9 in einer dickflüssigen Masse, die zu einem Haftkleberzustand photopolymerisierbar ist und in welcher der ionische Farbstoff unlöslich ist,
2) Beschichten eines Trägers mit der Mikrokügelchen enthaltenden dickflüssigen Masse und
3) Photopolymerisieren der aufgetragenen dickflüssigen Masse zu einem Haftkleberzustand.

## Revendications

1. Microbilles de verre ayant un diamètre moyen inférieur à 200 micromètres, auxquelles adhèrent des particules de silice colorée finement divisées, la surface spécifique de la silice étant comprise entre 50 et 400 m²/g

2. Microbilles de verre enrobées selon la revendication 1 dans lesquelles le rapport entre le colorant et la silice est compris entre 1:20 et 1:1 en poids.

3. Microbilles de verre enrobées selon la revendication 2 dans lesquelles le rapport entre la silice colorée et le verre des microbilles est compris entre 1:10 et 3:1 en poids.

4. Produit selon la revendication 1 dans lequel le rapport entre le colorant et la silice est compris entre 1:20 et 1:1 en poids et le rapport entre la silice colorée et le verre des microbilles est compris entre 1:30 et 3:1 en poids, les microbilles comprenant au moins 5 pourcent en volume de l'article.

5. Bande adhésive sensible à la pression comprenant un support flexible supportant une couche adhésive sensible à la pression dans laquelle sont dispersées des microbilles de verre enrobées selon les revendications 1, 2 ou 3, les microbilles enrobées comprenant au moins 5 pourcent en volume de la bande adhésive.

6. Bande adhésive sensible à la pression selon la revendication 5 dans laquelle l'adhésif sensible à la pression comprend au moins un copolymère de monomères comprenant (a) un ester d'acide acrylique d'alcool non tertiaire et (b) un monomère polaire copolymérisable.

7. Bande adhésive sensible à la pression selon la revendication 6 dans laquelle les monomères (a) comprennent une grande partie d'ester d'acide acrylique d'alcool alcoylé non tertiaire, dont les molécules ont entre 1 et 14 atomes de carbone, le monomère (b) étant principalement de l'acide acrylique.

8. Bande adhésive sensible à la pression selon la revendication 6 dans laquelle le monomère copolymérisable (b) sur une surface de la couche adhésive sensible à la pression est principalement de l'acide acrylique, et l'autre principalement du N-vinyl-2-pyrrolidone sur l'autre surface.

9. Procédé de fabrication des microbilles de verre colorées de la revendication 1 comprenant les étapes suivantes :
1) dissolution d'un solvant ionique dans un solvant volatile,
2) dispersion de silice finement divisée dans la solution,
3) mise en contact de la dispersion et des microbilles de verre ayant un diamètre moyen inférieur à 200 micromètres et
4) évaporation du solvant afin d'obtenir des microbilles de verre auxquelles adhèrent des particules de silice colorées dans lesquelles la surface spécifique de la silice est comprise entre 50 et 400 m²/g.

10. Procédé de fabrication d'une bande adhésive de type mousse sensible à la pression comportant les étapes suivantes:
1) dispersion des microbilles de verre colorées selon la revendication 9 dans un sirop susceptible de prendre par polymérisation un état adhésif sensible à la pression, et dans lequel ledit colorant ionique est insoluble,
2) enduction du sirop contenant les microbilles sur un support et
3) photopolymérisation du sirop enduit pour donner un état adhésif sensible à la pression.
